(19) Europäisches Patentamt
European Patent Office
Office européen des brevets

(11) **EP 4 365 236 A1**

(12) **EUROPEAN PATENT APPLICATION**
published in accordance with Art. 153(4) EPC

(43) Date of publication:
**08.05.2024 Bulletin 2024/19**

(21) Application number: **22833182.3**

(22) Date of filing: **28.06.2022**

(51) International Patent Classification (IPC):
**C08L 77/00** (2006.01)   **C08L 27/12** (2006.01)
**C08L 27/18** (2006.01)

(52) Cooperative Patent Classification (CPC):
**C08L 27/12; C08L 27/18; C08L 77/00**

(86) International application number:
**PCT/JP2022/025829**

(87) International publication number:
**WO 2023/277036 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **30.06.2021   JP 2021108983**

(71) Applicant: **AGC INC.**
**Chiyoda-ku,**
**Tokyo 1008405 (JP)**

(72) Inventors:
• **ABE, Masatoshi**
  **Tokyo 100-8405 (JP)**
• **SASAKI, Toru**
  **Tokyo 100-8405 (JP)**
• **NISHI, Eiichi**
  **Tokyo 100-8405 (JP)**
• **YODOGAWA, Masahide**
  **Tokyo 100-8405 (JP)**

(74) Representative: **Müller-Boré & Partner**
**Patentanwälte PartG mbB**
**Friedenheimer Brücke 21**
**80639 München (DE)**

(54) **COMPOSITION, AND METHOD FOR PRODUCING SAME**

(57)   To provide a polyamide type composition excellent in impact resistance.

A composition comprising a polyamide and a fluorinated polymer, wherein the fluorinated polymer has a glass transition temperature of less than 30°C and has no melting point, and the fluorinated polymer is dispersed in the polyamide, and the average dispersed particle diameter of the fluorinated polymer is less than 12 μm.

EP 4 365 236 A1

**Description**

TECHNICAL FIELD

The present invention relates to a composition and a method for its production.

BACKGROUND ART

A polyamide such as polyamide 6 or polyamide 66 is used in various applications as an engineering plastic since it is excellent in moldability, heat resistance, chemical resistance, rigidity, wear resistance, etc.
It has been proposed to blend a fluorinated polymer to the polyamide for the purpose of reducing water absorption, improving abrasion resistance, etc. (Patent Document 1).

PRIOR ART DOCUMENT

PATENT DOCUMENT

Patent Document 1: JP-A-2006-169399

DISCLOSURE OF INVENTION

TECHNICAL PROBLEM

However, the composition comprising the fluorinated polymer and the polyamide as described in Patent Document 1 was sometimes not sufficient in impact resistance.
The present invention provides a polyamide type composition excellent in impact resistance and a method for its production.

SOLUTION TO THE PROBLEM

The present invention has the following embodiments:

[1] A composition comprising a polyamide and a fluorinated polymer, wherein

the fluorinated polymer has a glass transition temperature of less than 30°C and has no melting point, and
the fluorinated polymer is dispersed in the polyamide, and the average dispersed particle diameter of the fluorinated polymer is less than 12 $\mu$m.

[2] The composition according to [1], which comprises the polyamide and the fluorinated polymer in a mass ratio of the polyamide/the fluorinated polymer = 40/60 to 99/1.
[3] The composition according to [1] or [2], wherein the Izod impact strength to be measured at 23 $\pm$ 1°C in accordance with ASTM D256 is greater than 60 J/m.
[4] The composition according to any one of [1] to [3], which satisfies the following formula (1) and the following formula (2):

$$|Q_1\text{-}Q_2| \leqq 60 \qquad (1)$$

$$10 \leqq (Q_3/Q_2) \times 100 \leqq 80 \qquad (2)$$

where $Q_1$ indicates the melt flow rate (g/10 min) of the fluorinated polymer, $Q_2$ indicates the melt flow rate (g/10 min) of the polyamide, and $Q_3$ indicates the melt flow rate (g/10 min) of the composition; and $Q_1$ to $Q_3$ are, respectively, values measured in accordance with ISO 1133 under conditions of a temperature of 280°C and a load of 2.16 kg.
[5] The composition according to any one of [1] to [4], wherein the fluorinated polymer is a fluorinated elastomer.
[6] The composition according to any one of [1] to [5], wherein the fluorinated polymer has a polar group.
[7] The composition according to [6], wherein the polar group is a bromine atom or an iodine atom.
[8] The composition according to any one of [1] to [7], wherein the fluorinated polymer is a copolymer having units based on tetrafluoroethylene and units based on propylene.

[9] The composition according to any one of [1] to [8], wherein the following 5% pyrolysis temperature of the fluorinated polymer is higher than 400°C.

5% pyrolysis temperature: The temperature at which the mass of the fluorinated polymer decreases by 5 mass% when the fluorinated polymer is heated under air at a temperature raising rate of 10°C/min using a simultaneous differential thermal gravimetry apparatus.

[10] A method for producing the composition as defined in any one of [1] to [9], wherein the polyamide and the fluorinated polymer are melt-kneaded in a mass ratio of the polyamide/the fluorinated polymer = 40/60 to 99/1 by using a biaxial extruder.

ADVANTAGEOUS EFFECTS OF INVENTION

According to the present invention, it is possible to provide a polyamide type composition excellent in impact resistance and a method for its production.

DESCRIPTION OF EMBODIMENTS

The meanings and definitions of terms in the present invention are as follows.

The "glass transition temperature" is the temperature corresponding to the maximum value of the tan$\delta$ peak measured by the dynamic viscoelasticity measurement (DMA) method. Hereafter, the glass transition temperature may be referred to also as Tg.

The "melting point" is the temperature corresponding to the maximum value of the melting peak measured by the differential scanning calorimetry (DSC) method.

The "5% pyrolysis temperature" is the temperature at which the mass of the sample (fluorinated polymer) decreases by 5 mass% when the sample (fluorinated polymer) is heated under air at a temperature raising rate of 10°C/min by using a differential thermal gravimetric analysis (TG-DTA) device (the temperature at which the mass of the sample becomes to be 95 mass% to 100 mass% of the sample before the temperature increase).

The "melt flow rate" is the melt mass flow rate to be measured in accordance with ISO 1133. Hereinafter, the melt flow rate will be referred to also as MFR. The measurement conditions for MFR are set to be a temperature of 280°C and a load of 2.16 kg.

The "Izod impact strength" is measured in accordance with ASTM D256. Unless otherwise stated, the Izod impact strength is a value at 23±2°C.

The "average dispersed particle diameter" is the average of the maximum diameters of 20 randomly selected domains (dispersed particles) measured by scanning electron microscopy (SEM) of a cross-section of a molded body of the composition. Details are as described in Examples given later.

A "unit based on a monomer" is a generic term for an atomic group formed directly by polymerization of a single monomer molecule and an atomic group obtainable by chemical conversion of a portion of the atomic group after polymerization.

A "monomer" means a compound having a polymerizable carbon-carbon double bond.

[Composition]

The composition in accordance with an embodiment of the present invention (hereinafter referred to also as "the present composition") comprises a polyamide and a fluorinated polymer. The present composition may further contain other components as the case requires. Each component will be described in detail later.

In the present composition, the fluorinated polymer is dispersed in the polyamide, and the average dispersed particle diameter of the fluorinated polymer is less than 12 $\mu$m. This improves the impact resistance while fully maintaining the excellent properties (moldability, etc.) of the polyamide.

The average dispersed particle diameter of the fluorinated polymer is preferably less than 9 $\mu$m, more preferably less than 7 $\mu$m, from the viewpoint of the impact resistance. Further, the average dispersed particle diameter of the fluorinated polymer is preferably at least 0.01 $\mu$m, more preferably at least 0.1 $\mu$m, from the viewpoint of the impact resistance.

The mass ratio of the polyamide to the fluorinated polymer (the polyamide/the fluorinated polymer) is preferably from 40/60 to 99/1, more preferably from 60/40 to 95/5, further preferably from 80/20 to 90/10. When the mass ratio of the polyamide/the fluorinated polymer is at least the above lower limit value, the impact resistance tends to be more excellent. When the mass ratio of the polyamide/the fluorinated polymer is at most the above upper limit value, it will be easier to make the fluorinated polymer dispersed in the polyamide. Further, the moldability of the composition tends to be more excellent.

The total content of the polyamide and the fluorinated polymer is preferably at least 40 mass%, more preferably at least 60 mass%, further preferably at least 80 mass% and may be 100 mass%, to the entire mass of the present composition.

The Izod impact strength of the present composition is preferably greater than 60 J/m, more preferably greater than 70 J/m, further preferably greater than 85 J/m. The higher the Izod impact strength of the present composition, the more desirable it is from the viewpoint of the impact resistance, and the upper limit is not particularly limited.

The present composition preferably satisfies the formulae (1) and (2).

$$|Q_1\text{-}Q_2|\leqq 60 \qquad (1)$$

$$10\leqq(Q_3/Q_2)\times 100\leqq 80 \qquad (2)$$

Here, $Q_1$ indicates MFR (g/10 min) of the fluorinated polymer, $Q_2$ indicates MFR (g/10 min) of the polyamide, and $Q_3$ indicates MFR (g/10 min) of the present composition.

When $|Q_1\text{-}Q_2|$ (the absolute value of $Q_1\text{-}Q_2$) is at most 60, the dispersibility of the fluorinated polymer will be more excellent. $|Q_1\text{-}Q_2|$ is preferably from 0 to 55. Further, in a case where a polyamide with high heat resistance is to be used, $|Q_1\text{-}Q_2|$ is preferably from 1 to 20.

Here, as the relationship between $Q_2$ and $Q_1$, dispersibility of the fluorinated polymer tends to be better even in a case where $Q_2/Q_1$ is from 0.1 to 600. $Q_2/Q_1$ is more preferably from 0.1 to 300, further preferably from 0.1 to 100.

When $(Q_3/Q_2)\times 100$ is at least 10, the moldability and impact resistance will be better, and when it is at most 80, the impact resistance and tensile elongation will be better. $(Q_3/Q_2)\times 100$ is preferably from 15 to 70, more preferably from 20 to 49.

MFR (Qs) of the present composition is preferably from 1 to 100 g/10 min, more preferably from 3 to 50 g/10 min. When MFR of the present composition is at least the above lower limit value, the moldability and strength will be more excellent, and when it is at most the above upper limit value, the impact resistance and elongation tend to be more excellent.

(Polyamide)

As the polyamide, a thermoplastic polyamide is preferred from the viewpoint of the processability. As the thermoplastic polyamide, a ring-opening addition polymer of a lactam and a condensation polymer of a diamine and a dicarboxylic acid are preferred. As the lactam, an aliphatic lactam is preferred. As the diamine, an aliphatic diamine and an aromatic dicarboxylic acid may be mentioned, and as the dicarboxylic acid, an aliphatic dicarboxylic acid and an aromatic dicarboxylic acid may be mentioned, and in the combination of such a diamine and a dicarboxylic acid, at least one of them is preferably an aliphatic compound. As specific examples of the lactam, ε-caprolactam, undecan lactam, lauryl lactam, etc. may be mentioned. As specific examples of the diamine, hexamethylenediamine, nonanediamine, xylylenediamine, etc. may be mentioned. As specific examples of the dicarboxylic acid, adipic acid, sebacic acid, terephthalic acid, isophthalic acid, etc. may be mentioned.

As specific examples of the thermoplastic polyamide, for example, polyamide 6 (PA6), polyamide 66 (PA66), polyamide 46 (PA46), polyamide 11 (PA11), polyamide 12 (PA12), polyamide 610 (PA610), polyamide 612 (PA612), polyamide 6/66 copolymer (PA6/66), polyamide 6/66/610 copolymer (PA6/66/610), polyamide MXD6 (MXD6), polyamide 6T, polyamide 9T (PA9T) and polyamide 6/6T copolymer, may be mentioned. Here, MXD stands for meta-xylidene diamine, and T for terephthalic acid. Two or more types of these polyamides may be used in combination.

As the polyamide, from the viewpoint of the impact resistance, a polyamide selected from the group consisting of PA6, PA66, PA12, PA46, PA612, PA9T, PA6T and MXD6 is preferred; PA66, PA6, PA9T and PA6T are more preferred; and PA66 and PA6 are particularly preferred.

The polyamide may have its main chain terminal sealed by a sealant.

As the sealant, a compound having one functional group that is reactive with the amino or carboxy group at the main chain terminal of the polyamide, is preferred, and from the viewpoint of excellency in reactivity and stability of the sealed terminal, a monocarboxylic acid or a monoamine is more preferred, and from the viewpoint of excellency in handling efficiency, a monocarboxylic acid is more preferred. In addition, acid anhydrides such as phthalic anhydride, isocyanates, acid halides, esters, monoalcohols, etc. may also be used.

As specific examples of the monocarboxylic acid, an aliphatic monocarboxylic acid such as acetic acid, propionic acid, butyric acid, valeric acid, caproic acid, caprylic acid, lauric acid, tridecanoic acid, myristic acid, palmitic acid, stearic acid, pivalic acid, isobutyric acid or the like, an alicyclic monocarboxylic acid such as cyclohexane carboxylic acid or the like, an aromatic monocarboxylic acid such as benzoic acid, toluyl acid, α-naphthalenecarboxylic acid, β-naphthalenecarboxylic acid, methylnaphthalenecarboxylic acid or the like, and a mixture thereof, may be mentioned. Among them, from the viewpoint of excellency in the reactivity and stability of the sealed terminal, and being inexpensive, acetic acid, propionic acid, butyric acid, valeric acid, caproic acid, caprylic acid, lauric acid, tridecanoic acid, myristic acid, palmitic acid, stearic acid and benzoic acid are preferred.

As specific examples of the monoamine, an aliphatic monoamine such as methylamine, ethylamine, propylamine, butylamine, hexylamine, octylamine, decylamine, stearylamine, dimethylamine, diethylamine, dipropylamine, dibutylamine or the like, an alicyclic monoamine such as cyclohexylamine, dicyclohexylamine or the like, an aromatic monoamine such as aniline, toluidine, diphenylamine, naphthylamine or the like, and a mixture thereof, may be mentioned. Among them, from the viewpoint of their high boiling points, excellency in reactivity and stability of the sealing terminal, and low cost, butylamine, hexylamine, octylamine, decylamine, stearylamine, cyclohexylamine and aniline are preferred.

MFR ($Q_2$) of the polyamide is preferably from 1 to 200 g/10 min., more preferably from 5 to 100 g/10 min. When MFR of the polyamide is at least the above lower limit value, the moldability and elongation of the composition will be more excellent, and when it is at most the above upper limit value, the impact resistance and strength of the composition tend to be more excellent.

(Fluorinated polymer)

The fluorinated polymer has a Tg of less than 30°C and has no melting point. This improves the impact resistance of the composition. The Tg of the fluorinated polymer is, from the viewpoint of the heat resistance, preferably at least -30°C, more preferably at least -20°C.

The fluorinated polymer having a Tg of less than 30°C and has no melting point, is typically a fluorinated elastomer.

The fluorinated elastomer is a fluorinated elastic copolymer having no melting point, that exhibits a storage modulus G' of at least 80 at 100°C and 50 cpm, as measured in accordance with ASTM D6204, and is distinguished from a fluorinated polymer having a melting point.

MFR ($Q_1$) of the fluorinated polymer is preferably from 0.01 to 200 g/10 min., more preferably from 1 to 100 g/10 min. When MFR of the fluorinated polymer is at least the above lower limit value, the moldability and elongation of the composition will be more excellent, and when it is at most the above upper limit value, the impact resistance and strength of the composition tend to be more excellent.

The 5% pyrolysis temperature of the fluorinated polymer is, from the viewpoint of foam suppression, preferably higher than 400°C, more preferably higher than 410°C. The higher the 5% pyrolysis temperature, the better, and the upper limit is not particularly limited, but is, for example, 550°C.

The fluorinated polymer preferably has a polar group. When the fluorinated polymer has a polar group, the compatibility with the polyamide tends to be better.

As the polar group, for example, an iodine atom, a bromine atom, an epoxy group, an acid anhydride group, a hydroxy group, an amino group, an alkyl halide group (but excluding an alkyl fluoride group) or a carboxy group may be mentioned. As the halogen atom in the alkyl halide group, an iodine atom, a bromine atom, a chlorine atom or the like may be mentioned. The fluorinated polymer may have two or more polar groups.

As the polar group, from the viewpoint of the heat resistance of the present composition, a polar group selected from the group consisting of a bromine atom and an iodine atom is preferred.

The polar group may be present at the main chain terminal of the fluorinated polymer, may be present at a side group, or may be present at both of them. A fluorinated polymer having a polar group at the main chain terminal is obtainable, for example, by using a chain transfer agent having a polar group at the time of polymerizing a monomer (see, for example, WO2009/119202 and WO2017/057512). A fluorinated polymer having a polar group in a side group is obtainable, for example, by using a monomer having a polar group.

As the fluorinated polymer, preferred is a copolymer (hereinafter referred to also as "copolymer 1") having at least one type of units based on a monomer (hereinafter referred to also as "monomer m1") being tetrafluoroethylene (hereinafter referred to also as "TFE"), hexafluoropropylene (hereinafter referred to also as "HFP"), vinylidene fluoride (hereinafter referred to also as "VdF") or chlorotrifluoroethylene (hereinafter referred to also as "CTFE").

As the copolymer 1, for example, a copolymer having two or three types of units based on monomer m1 (hereinafter referred to also as "copolymer 1-1") or a copolymer having at least one type of units based on monomer m1 and at least one type of the following monomer m2 (hereinafter referred to also as "copolymer 1-2") may be mentioned.

Monomer m2 is ethylene (hereinafter referred to also as "E"), propylene (hereinafter referred to also as "P"), a perfluoro(alkyl vinyl ether) (hereinafter referred to also as "PAVE"), vinyl fluoride (hereinafter referred to also as "VF"), 1,2-difluoroethylene (hereinafter referred to also as "DiFE"), 1,1,2-trifluoroethylene (hereinafter referred to also as "TrFE"), 3,3,3-trifluoro-1-propylene (hereinafter referred to also as "TFP"), 1,3,3,3-tetrafluoropropylene or 2,3,3,3-tetrafluoropropylene.

As PAVE, for example, a compound represented by the following formula (3) may be mentioned.

$$CF_2=CF(OR^F) \qquad (3)$$

Here, $R^F$ indicates a $C_{1-8}$ perfluoroalkyl group.

$R^F$ may be linear or branched.

As PAVE, for example, perfluoro(methyl vinyl ether) (hereinafter referred to also as "PMVE"), perfluoro(ethyl vinyl ether) (hereinafter referred to also as "PEVE"), perfluoro(propyl vinyl ether) (hereinafter referred to also as "PPVE") or perfluoro(butyl vinyl ether) (hereinafter referred to also as "PBVE") may be mentioned.

Copolymers 1-1 and 1-2 may, respectively, further have at least one type of units based on a monomer other than monomer m1 and monomer m2 (hereinafter referred to also as "monomer m3") that can be copolymerized with monomer m1 and that makes the copolymer with monomer m1 to be an elastic copolymer.

As monomer m3, for example, a compound represented by the following formula (4) (hereinafter referred to also as "compound 4"), or a monomer having a polar group, may be mentioned.

$$CR^1R^2=CR^3-R^4-CR^5=CR^6R^7 \qquad (4)$$

Here, $R^1$, $R^2$, $R^3$, $R^5$, $R^6$ and $R^7$ each independently indicate a hydrogen atom, a fluorine atom or a methyl group, and $R^4$ indicates a $C_{1-10}$ perfluoroalkylene group or a group having an etheric oxygen atom at both terminals, one terminal or between carbon-carbon bonds of the above perfluoroalkylene group.

As suitable examples of compound 4, $CF_2=CFO(CF_2)_3OCF=CF_2$ (referred to also as "C3DVE"), $CF_2=CFO(CF_2)_4OCF=CF_2$, and $CH_2=CH(CF_2)_6CH=CH_2$ may be mentioned.

As the monomer having a polar group, for example, a monoiodide, a diiodide, a vinyl compound containing bromine, chlorine or iodine, and other monomers described in [0013] of Japanese Patent No. 4120527 may be mentioned.

The ratio of units based on monomer m3 is, to all units constituting copolymer 1-1 or 1-2, preferably from 0 to 50 mol%, more preferably from 0 to 20 mol%, further preferably from 0 to 5 mol%, particularly preferably 0 mol%.

As copolymer 1, the following three copolymers are preferred. Here, the proportion of the total of the respective units specifically indicated in the following three copolymers is preferably at least 50 mol%, in all units constituting the copolymer.

Copolymer having TFE units and P units (hereinafter referred to also as "TFE/P-containing copolymer").

Copolymer having HFP units and VdF units (but excluding one having P units) (hereinafter referred to also as "HFP/VdF-containing copolymer").

Copolymer having TFE units and PAVE units (but excluding one having P units or VdF units) (hereinafter referred to also as "TFE/PAVE-containing copolymer").

As the TFE/P-containing copolymer, the following ones may be mentioned.

TFE/P (means a copolymer consisting of TFE units and P units; the same applies to others), TFE/P/VF, TFE/P/VdF, TFE/P/E, TFE/P/TFP, TFE/P/PAVE, TFE/P/1,3,3,3-tetrafluoropropene, TFE/P/2,3,3,3-tetrafluoropropene, TFE/P/TrFE, TFE/P/DiFE, TFE/P/VdF/TFP, TFE/P/VdF/PAVE, and TFE/P/compound 4, may be mentioned, and among them, TFE/P and TFE/P/compound 4 are preferred.

As the HFP/VdF-containing copolymer, HFP/VdF, TFE/VdF/HFP, TFE/VdF/HFP/TFP, TFE/VdF/HFP/PAVE, VdF/HFP/TFP and VdF/HFP/PAVE may be mentioned, and among them, HFP/VdF is preferred.

As the TFE/PAVE-containing copolymer, TFE/PAVE may be mentioned, and particularly, TFE/PMVE and TFE/PMVE/PPVE, in which PAVE is PMVE and PPVE, are preferred, and among them, TFE/PMVE is preferred.

As other examples of the copolymer 1, TFE/VdF/2,3,3,3-tetrafluoropropylene, VdF/PAVE, VdF/2,3,3,3-tetrafluoropropylene and E/HFP may be mentioned.

As the copolymer 1, from the viewpoint of heat resistance, the TFE/P-containing copolymer is preferred, and TFE/P and TFE/P/compound 4 are particularly preferred. TFE/P has good thermal stability during melt-kneading and stable transportability during melt-kneading. The TFE/P/compound 4 is excellent in heat resistance and compatibility with the polyamide.

The ratios of the respective units constituting the copolymer 1 are preferably in the following ranges from the viewpoint of easy contribution to the impact resistance of the molded body.

The molar ratios of the respective units in TFE/P (TFE:P; the same applies hereinafter) are preferably 30 to 80:70 to 20, more preferably 40 to 70:60 to 30, further preferably 50 to 60:50 to 40.

In TFE/P/VF, TFE:P:VF is preferably 30 to 60:60 to 20:0.05 to 40.

In TFE/P/VdF, TFE:P:VdF is preferably 30 to 60:60 to 20:0.05 to 40.

In TFE/P/E, TFE:P:E is preferably 20 to 60:70 to 30:0.05 to 40.

In TFE/P/TFP, TFE:P:TFP is preferably 30 to 60:60 to 30:0.05 to 20.

In TFE/P/PAVE, TFE:P:PAVE is preferably 40 to 70:60 to 29.95:0.05 to 20.

In TFE/P/1,3,3,3-tetrafluoropropene, TFE:P:1,3,3,3-tetrafluoropropene is preferably 30 to 60:60 to 20:0.05 to 40.

In TFE/P/2,3,3,3-tetrafluoropropene, TFE:P:2,3,3,3-tetrafluoropropene is preferably 30 to 60:60 to 20:0.05 to 40.

In TFE/P/TrFE, TFE:P:TrFE is preferably 30 to 60:60 to 20:0.05 to 40.

In TFE/P/DiFE, TFE:P:DiFE is preferably 30 to 60:60 to 20:0.05 to 40.

In TFE/P/VdF/TFP, TFE:P:VdF:TFP is preferably 30 to 60:60 to 20:0.05 to 40:0.05 to 20.

In TFE/P/VdF/PAVE, TFE:P:VdF:PAVE is preferably 30 to 70:60 to 20:0.05 to 40:0.05 to 20.

In TFE/P/compound 4, TFE:P:compound 4 is preferably 40 to 75:55 to 20:0.01 to 10, more preferably 45 to 60:50 to 35:0.01 to 5.0.

In HFP/VdF, HFP:VdF is preferably 99 to 5:1 to 95.

In TFE/VdF/HFP, TFE:VdF:HFP is preferably 20 to 60:1 to 40:20 to 60.

In TFE/VdF/HFP/TFP, TFE:VdF:HFP:TFP is preferably 30 to 60:0.05 to 40:60 to 20:0.05 to 20.

In TFE/VdF/HFP/PAVE, TFE:VdF:HFP:PAVE is preferably 30 to 70:60 to 20:0.05 to 40:0.05 to 20.

In VdF/HFP/TFP, VdF:HFP:TFP is preferably 1 to 90:95 to 5:0.05 to 20.

In VdF/HFP/PAVE, VdF:HFP:PAVE is preferably 20 to 90:9.95 to 70:0.05 to 20.

In TFE/PAVE, TFE:PAVE is preferably 40 to 70:60 to 30. Further, in a case where PAVE is PMVE, TFE:PMVE is preferably 40 to 70:60 to 30.

In TFE/PMVE/PPVE, TFE:PMVE:PPVE is preferably 40 to 70:3 to 57:3 to 57.

In TFE/VdF/2,3,3,3-tetrafluoropropylene, TFE:VdF:2,3,3,3-tetrafluoropropylene is preferably 1 to 30:30 to 90:5 to 60.

In VdF/PAVE, VdF:PAVE is preferably 3 to 95:97 to 5.

In VdF/2,3,3,3-tetrafluoropropylene, VdF:2,3,3,3-tetrafluoropropylene is preferably 30 to 95:70 to 5.

In E/HFP, E:HFP is preferably 40 to 60:60 to 40.

The copolymer 1 can be produced by polymerizing at least one type of monomer m1 and, as the case requires, at least one type of one or both of monomer m2 and monomer m3 in the presence of a radical polymerization initiator. At that time, a chain transfer agent may be present.

As the polymerization method, an emulsion polymerization method, a solution polymerization method, a suspension polymerization method, a bulk polymerization method, etc. may be mentioned. From such a viewpoint that adjustment of the molecular weight of the copolymer 1 and the composition of the copolymer will be easy and productivity will be excellent, an emulsion polymerization method, in which the monomers are polymerized in the presence of an aqueous medium and an emulsifier, is preferred.

In the emulsion polymerization method, the monomers are polymerized in the presence of an aqueous medium, an emulsifier, and a radical polymerization initiator to obtain a copolymer 1 latex. A pH adjuster may be added at the time of polymerization of the monomers.

(Other components)

As other components, additives such as a filler, a plasticizer and a flame retardant may be mentioned. Two or more types of these additives may be used in combination.

As the filler, an inorganic filler or the like may be mentioned.

As the inorganic filler, without being particularly limited, known plasticizers may be employed, and, for example, $CaCO_3$, $SiO_2$, $TiO_2$, $BaSO_4$, ZnO, $Al(OH)_3$, $Mg(OH)_2$, talc, mica, carbon black, white carbon, clay, carbon nanotubes, glass fiber and carbon fiber may be mentioned. As the carbon black, furnace black, acetylene black, thermal black, channel black, graphite, etc. may be mentioned.

As the plasticizer, without being particularly limited, known plasticizers may be employed, and phthalates, adipates, etc. may be mentioned.

As the flame retardant, without being particularly limited, known flame retardants may be employed, and aluminum hydroxide, magnesium hydroxide, magnesium carbonate, antimony trioxide, sodium antimonate, antimony pentoxide, phosphazene compounds, phosphate esters, polyammonium phosphate, polyphosphoric acid melamine/mellum/melem, red phosphorus, molybdenum compounds, boric acid compounds, PTFE, etc., antimony trioxide, phosphates such as triphenyl phosphate, tricresyl phosphate, tri-xylenyl phosphate, credylphenyl phosphate, 2-ethylhexyl diphenyl phosphate and other aromatic phosphates, and polytetrafluoroethylene being an anti-drip agent that forms fibrillar structures in the present composition, etc. may be mentioned.

(Production method for composition)

The present composition can be produced, for example, by a method of melt-kneading a polyamide and a fluorinated polymer in a mass ratio of the polyamide/the fluorinated polymer = 40/60 to 99/1 by using a twin-screw extruder.

The mass ratio of the polyamide/the fluorinated polymer is preferably 99/1 to 30/70, more preferably 99/5 to 50/50.

In the case of incorporating other components to the present composition, other components may be added at the time of melt-kneading the polyamide and the fluorinated polymer, or they may be added after melt-kneading the polyamide and the fluorinated polymer.

By melt-kneading by using a twin-screw extruder, dispersibility of the fluorinated polymer tends to be easily raised.

As the twin-screw extruder, any known twin-screw extruder may be used, and a twin-screw extruder equipped with a screw with high kneading effect is preferred. As the screw with high kneading effect, one which has sufficient kneading effect on the melt-kneading object and which does not exert an excessive shear force may be selected.

As the twin-screw extruder equipped with a screw with high kneading effect, for example, a Labo Plastomill kneading machine (manufactured by Toyo Seiki Seisaku-sho, Ltd.) may be mentioned.

At the time of feeding the polyamide and the fluorinated polymer to the twin-screw extruder, the polyamide and the fluorinated polymer may be pre-mixed, whereupon the mixture may be fed to the twin-screw extruder, or the polyamide and the fluorinated polymer may be fed separately to the twin-screw extruder.

At the time of incorporating other components to the composition, other components may be pre-mixed with one of the polyamide and the fluorinated polymer and fed to the twin-screw extruder, or may be fed to the twin-screw extruder separately from the polyamide and the fluorinated polymer. Other components may be added after melt-kneading the polyamide and the fluorinated polymer, as described above.

In the production method for the present composition, the melt-kneading conditions (kneading temperature, extrusion shear rate, residence time of the melt-kneading object in the twin-screw extruder, discharge volume, extruder LID (L: screw length, D: screw diameter), screw segment, etc.) are optionally adjusted so that the fluorinated polymer will be dispersed in the polyamide with an average dispersed particle diameter of less than 12 $\mu$m.

When the kneading temperature is sufficiently high, the fluorinated polymer tends to be easily dispersed in the polyamide at the time of melt kneading, and coarse particles of the fluorinated polymer tend to be less likely to remain. When the kneading temperature is sufficiently low, thermal decomposition of the fluorinated polymer is less likely to be accelerated, and the fluorinated polymer will not become too small in diameter.

When the extrusion shear rate is sufficiently high, the fluorinated polymer tends to be easily dispersed in the polyamide at the time of melt kneading, and coarse particles of the fluorinated polymer tend to be less likely to remain. When the extrusion shear rate is sufficiently small, the fluorinated polymer will not become too small in diameter.

When the residence time of the melt-kneading object in the twin-screw extruder is sufficiently long, the fluorinated polymer tends to be easily dispersed in the polyamide at the time of melt-mixing, and coarse particles of the fluorinated polymer tend to be less likely to remain. When the residence time is sufficiently short, thermal decomposition of the fluorinated polymer tends to be less likely to be accelerated.

The kneading temperature depends on the polyamide or the fluorinated polymer to be used, but is preferably from 150 to 500°C, more preferably from 200 to 420°C, further preferably from 230 to 350°C. The extrusion shear rate is preferably set depending on the melt viscosity of the melt-kneading object at the above kneading temperature.

The extrusion shear rate is preferably from 1 to 15,000 s$^{-1}$, more preferably from 20 to 5,000 s$^{-1}$, further preferably from 30 to 2,000 s$^{-1}$.

The extrusion shear rate can be adjusted by the screw rotational speed. A screw rotational speed is preferably from 5 to 1,000 rpm, more preferably from 30 to 700 rpm, further preferably from 50 to 500 rpm.

The residence time of the melt-kneading object in the twin-screw extruder is preferably from 3 to 2,000 seconds, more preferably from 5 to 600 seconds, further preferably from 10 to 300 seconds.

The polyamide and the fluorinated polymer are preferably melt-kneaded without the substantial presence of a crosslinking agent and a crosslinking aid.

Melt-kneading without the substantial presence of a crosslinking agent and a crosslinking aid means that melt-kneading is conducted without substantially letting the fluorinated polymer in the composition to be crosslinked. Whether or not the fluorinated polymer in the composition is substantially crosslinked, can be confirmed by the flexural modulus value of the composition. If the fluorinated polymer in the composition is substantially crosslinked, the flexibility of the fluorinated polymer is lost, and thus, the flexural modulus of the composition exceeds 3,700 MPa.

By melt-kneading without the substantial presence of a crosslinking agent and a crosslinking aid, it is possible to ensure the flexibility of the fluorinated polymer in the composition and improve the impact resistance of the composition.

(Applications)

The present composition is melt-moldable and can be made into a molded body by melt molding. The present composition can also be used as a coating material in a powder form. As applications of coated articles, those described in WO2015/182702 may be mentioned.

The present composition is also useful as an additive for fiber-reinforced molded products or as a matrix for prepregs.

When the present composition is melt-molded into a molded product, as the melt-molding method, a known melt-molding method such as injection molding, extrusion molding, co-extrusion molding, blow molding, compression molding, inflation molding, transfer molding, calendering, etc. may be employed.

Here, the production of the molded product may be carried out continuously following the above-described production of the present composition.

The molded product of the present composition can be used for various applications. As specific examples, although not particularly limited, sliding members, sealing materials, gears, actuators, pistons, bearings, housings, aircraft interior materials, fuel tubes, bushings, tubes, hoses, tanks, seals, wires, cables, films, sheets, bottles, fibers, etc. may be mentioned. It is also suitable for other applications as described in JP-A-2018-203979.

(Advantageous effects)

In the above described present composition, a specific fluorinated polymer is dispersed in a polyamide with a specific average dispersed particle diameter, so the composition has superior impact resistance as compared to the polyamide. Further, since the fluorinated polymer is excellent in thermal decomposition resistance, the present composition also is excellent in thermal decomposition resistance and excellent in processability.

EXAMPLES

In the following, the present invention will be described in further detail with reference to Examples, but the present invention is not limited to these Examples. The "parts" indicates "parts by mass".

Ex. 1 to 5 are Examples of the present invention, and Ex. 6 to 9 are Comparative Examples.

(Evaluation methods)

<Glass transition temperature (Tg)>

Tg was measured by using a DMA apparatus (DMS6100, manufactured by Hitachi High-Tech Science Corporation) at a temperature-raising rate of 2°C/min.

<Melting point>

The melting point was measured by using a DSC apparatus (DSC7020, manufactured by Hitachi High-Tech Science Corporation) at a temperature-raising rate of 10°C/min.

.

<5% pyrolysis temperature>

The 5% pyrolysis temperature was measured by using a TGDTA apparatus (TG/DTA7200, manufactured by Hitachi High-Tech Science Corporation) at a temperature-raising rate of 10°C/min.

<Melt flow rate (MFR)>

MFR was measured by using MELT INDEXER (manufactured by Takara Thermistor Co., Ltd.) in accordance with ISO 1133. Measurement conditions were set to be a temperature of 280°C and a load of 2.16 kg.

<Impact strength (Izod impact strength)>

Izod impact strength was determined by conducting an Izod impact test at 23±2°C in accordance with ASTM D256 by using an Izod test apparatus (manufactured by Toyo Seiki Seisaku-sho, Ltd.).

<Average dispersed particle diameter>

The composition was press-formed at 265°C to prepare a press sheet (dimensions 130 mm × 130 mm × 1 mm thick). After the press sheet was freeze-dried, it was cut by a cutter and its cross section was observed by SEM (manufactured by JEOL, JSM-IT700HR, magnification 5,000x). The maximum diameters of the respective domains (domain sizes) were measured from the SEM image, and the average value of the respective domain sizes was used as the average dispersed particle diameter. Here, the fact that the substance constituting the respective domains was a fluorinated polymer was confirmed by energy dispersive X-ray spectroscopy (EDS) analysis using JEOL's JSM-IT700HR.

(Materials used)

PA6: "1013B" manufactured by Ube Industries, Ltd.
PA66: "Leona 1402S", manufactured by Asahi Kasei Corporation.
PA9T: "Genestar N1000A", manufactured by Kuraray.
Fluorinated polymer A: Fluoroelastomer, synthesized in the same manner as in Example 1 of WO2009/119202, copolymer of TFE/P = 56/44 (molar ratio), containing iodine at the main chain terminal.
Fluorinated polymer B: Fluoroelastomer, copolymer of TFE/P = 56/44 (molar ratio), not containing iodine.
Fluorinated polymer C: Fluoroelastomer, synthesized in the same manner as in Example 5 of WO2017/057512, copolymer of TFE/P/C3DVE = 56/43.8/0.2 (molar ratio) (C3DVE indicates $CF_2=CFO(CF_2)_3OCF=CF_2$) containing iodine at the main chain terminal.
Fluorinated polymer D: Non-elastomer, copolymer of TFE/ethylene/C2/Itaconic anhydride = 58.5/39/2.4/0.1 (molar ratio) (C2 indicates $CH_2=CHC_2F_5$).

(Ex. 1 to 9)

Using a Labo Plastomill (manufactured by Toyo Seiki Seisaku-sho, Ltd.), in accordance with the formulation shown in Table 1, the respective materials were preheated and melt-kneaded to obtain a composition. The kneading conditions were set to be 300°C, a screw rotational speed of 50 rpm, a preheating time of 2 minutes and a kneading time of 7 minutes.

(Ex. 10 and 11)

The composition was obtained in the same manner as in Ex. 1, except that among the kneading conditions, the temperature was changed from 300°C to 320°C.
With respect to the obtained compositions, the above-described evaluations were conducted. The results are shown in Table 1.

[Table 1]

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Formulation (parts) | PA66 | 90 | 80 | 70 | 80 | - | 100 | 80 | - | 80 | - | - |
| | PA6 | - | - | - | - | 80 | - | - | 100 | - | - | - |
| | PA9T | - | - | - | - | - | - | - | - | - | 90 | 100 |
| | Fluorinated polymer A | 10 | 20 | 30 | - | 20 | - | - | - | - | 10 | - |
| | Fluorinated polymer B | - | - | - | - | - | - | 20 | - | - | - | - |
| | Fluorinated polymer C | - | - | - | 20 | - | - | - | - | - | - | - |
| | Fluorinated polymer D | - | - | - | - | - | - | - | - | 20 | - | - |
| Property of polyamide | MFR [$Q_2$] (g/10 min) | 55 | 55 | 55 | 55 | 64 | 55 | 55 | 64 | 55 | - | - |

(continued)

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Properties of fluorinated polymer | MFR [$Q_1$] (g/10 min) | 8.8 | 8.8 | 8.8 | 0.1 | 8.8 | - | 0.1 | - | 21 | 8.8 | - |
| | Tg (°C) | -4 | -4 | -4 | -4 | -4 | - | -4 | - | 65 | -4 | - |
| | Melting point (°C) | Nil | Nil | Nil | Nil | Nil | - | Nil | - | 240 | Nil | - |
| | 5% pyrolysis temp. (°C) | 426 | 426 | 426 | 411 | 426 | - | 432 | - | 385 | 426 | |
| Average dispersed particle diameter of fluorinated polymer ($\mu$m) | | 1 | 3 | 3 | 4 | 3 | - | 13 | - | 0.7 | 2 | - |
| Physical properties of composition | MFR [$Q_3$] (g/10 min) | 33 | 27 | 19 | 38.3 | 27 | 55 | 38 | 64 | 27 | - | - |
| | Impact resistance strength (J/m) | 66 | 152 | 165 | 85 | 157 | 37 | 51 | 29 | 83 | 121 | 58 |
| MFR ratio: $Q_3/Q_2 \times 100$ | | 61 | 50 | 34 | 70 | 49 | 100 | 70 | 100 | 50 | - | - |

The compositions in Ex. 1 to 5 were superior in impact resistance as compared to Ex. 6 and 8 which used the polyamide alone. Further, MFR was at least 5 g/10 min., and the excellent properties of the polyamide (moldability, etc.) were sufficiently maintained.

On the other hand, the composition in Ex. 7, in which the average dispersed particle diameter of the fluorinated polymer was at least 12 $\mu$m, was inferior in impact resistance as compared to the compositions in Ex. 1 to 5.

The composition in Ex. 9, which used a fluorinated polymer having a Tg of at least 30°C and a melting point, was inferior in impact resistance as compared to compositions in e.g. Ex. 2, which used the same amount of the fluorinated polymer.

The composition in Ex. 10, which used PA9T as the polyamide, was superior in impact resistance as compared to Ex. 11, which used the polyamide alone.

The entire disclosure of Japanese Patent Application No. 2021-108983 filed on June 30, 2021 including specification, claims, drawings and summary is incorporated herein by reference in its entirety.

**Claims**

1. A composition comprising a polyamide and a fluorinated polymer, wherein

   the fluorinated polymer has a glass transition temperature of less than 30°C and has no melting point, and
   the fluorinated polymer is dispersed in the polyamide, and the average dispersed particle diameter of the fluorinated polymer is less than 12 $\mu$m.

2. The composition according to Claim 1, which comprises the polyamide and the fluorinated polymer in a mass ratio of the polyamide/the fluorinated polymer = 40/60 to 99/1.

3. The composition according to Claim 1 or 2, wherein the Izod impact strength to be measured at 23 $\pm$ 1°C in accordance with ASTM D256 is greater than 60 J/m.

4. The composition according to any one of Claims 1 to 3, which satisfies the following formula (1) and the following formula (2):

$$|Q_1 - Q_2| \leq 60 \qquad (1)$$

$$10 \leq (Q_3/Q_2) \times 100 \leq 80 \qquad (2)$$

where $Q_1$ indicates the melt flow rate (g/10 min) of the fluorinated polymer, $Q_2$ indicates the melt flow rate (g/10 min) of the polyamide, and $Q_3$ indicates the melt flow rate (g/10 min) of the composition; and $Q_1$ to $Q_3$ are, respectively, values measured in accordance with ISO 1133 under conditions of a temperature of 280°C and a load of 2.16 kg.

5. The composition according to any one of Claims 1 to 4, wherein the fluorinated polymer is a fluorinated elastomer.

6. The composition according to any one of Claims 1 to 5, wherein the fluorinated polymer has a polar group.

7. The composition according to Claim 6, wherein the polar group is a bromine atom or an iodine atom.

8. The composition according to any one of Claims 1 to 7, wherein the fluorinated polymer is a copolymer having units based on tetrafluoroethylene and units based on propylene.

9. The composition according to any one of Claims 1 to 8, wherein the following 5% pyrolysis temperature of the fluorinated polymer is higher than 400°C.
5% pyrolysis temperature: The temperature at which the mass of the fluorinated polymer decreases by 5 mass% when the fluorinated polymer is heated under air at a temperature raising rate of 10°C/min using a simultaneous differential thermal gravimetry apparatus.

10. A method for producing the composition as defined in any one of Claims 1 to 9, wherein the polyamide and the fluorinated polymer are melt-kneaded in a mass ratio of the polyamide/the fluorinated polymer = 40/60 to 99/1 by using a biaxial extruder.

<table>
<tr><td colspan="2"><b>INTERNATIONAL SEARCH REPORT</b></td><td colspan="2">International application No.<br><b>PCT/JP2022/025829</b></td></tr>
</table>

| A. | CLASSIFICATION OF SUBJECT MATTER |
|---|---|

*C08L 77/00*(2006.01)i; *C08L 27/12*(2006.01)i; *C08L 27/18*(2006.01)i
FI:   C08L77/00; C08L27/12; C08L27/18

According to International Patent Classification (IPC) or to both national classification and IPC

| B. | FIELDS SEARCHED |
|---|---|

Minimum documentation searched (classification system followed by classification symbols)

C08L77/00; C08L27/12; C08L27/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br><br>Y | JP 2008-308657 A (DAIKIN IND LTD) 25 December 2008 (2008-12-25)<br>    claims, paragraphs [0028]-[0036], [0071], examples | 1-10<br><br>6-8 |
| X<br><br>Y | JP 2007-119581 A (UNITIKA LTD) 17 May 2007 (2007-05-17)<br>    claims, paragraphs [0003], [0013]-[0014], [0020] | 1-5, 9-10<br><br>6-8 |
| A | WO 2019/198771 A1 (AGC INC.) 17 October 2019 (2019-10-17)<br>    claims, paragraphs [0012], [0017] | 1-10 |
| A | WO 2020/086218 A1 (AGC INC.) 30 April 2020 (2020-04-30)<br>    whole document | 1-10 |
| A | WO 2013/005587 A1 (OLYMPUS CORPORATION) 10 January 2013 (2013-01-10)<br>    entire text | 1-10 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **20 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/025829**

| Patent document cited in search report | | | Publication date (day/month/year) | Patent family member(s) | | | Publication date (day/month/year) |
|---|---|---|---|---|---|---|---|
| JP | 2008-308657 | A | 25 December 2008 | (Family: none) | | | |
| JP | 2007-119581 | A | 17 May 2007 | (Family: none) | | | |
| WO | 2019/198771 | A1 | 17 October 2019 | US | 2020/0369878 | A1 | |
| | | | | claims, paragraphs [0030], [0036] | | | |
| | | | | DE | 112019001954 | T | |
| | | | | CN | 111954697 | A | |
| WO | 2020/086218 | A1 | 30 April 2020 | US | 2019/0055390 | A1 | |
| | | | | EP | 3870649 | A1 | |
| | | | | CN | 113166533 | A | |
| | | | | KR | 10-2021-0106411 | A | |
| | | | | CA | 3117167 | A | |
| WO | 2013/005587 | A1 | 10 January 2013 | US | 2014/0021416 | A1 | |
| | | | | whole document | | | |
| | | | | CN | 103415571 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006169399 A
- WO 2009119202 A
- WO 2017057512 A
- JP 4120527 B
- WO 2015182702 A
- JP 2018203979 A
- JP 2021108983 A